# NEW EUROPEAN PATENT SPECIFICATION

(11) **EP 0 393 974 B2**
(45) Date of publication and mention of the opposition decision: **23.08.2000**
(45) Mention of the grant of the patent: 01.02.1995
(21) Application number: 90304086.3
(22) Date of filing: 17.04.1990
(51) Int. Cl.: F02D 11/10, F02D 11/02, G05D 13/00

(54) **Pedal mechanism for electronic throttle**
Pedalanordnung für die elektronische Kraftstoffregelung
Mécanisme à pédale pour la commande électronique de la pompe d'injection

(30) Priority: 18.04.1989 US 340234
(43) Date of publication of application: 24.10.1990
(73) Proprietor: WILLIAMS CONTROLS, INC., Portland, Oregon 97224 (US)
(72) Inventor: Lundberg, Chester E., Sherwood, Oregon 97140 (US)
(74) Representative: Jones, Ian

(56) References cited:
- DE-A- 3 215 167
- DE-A- 3 411 393
- FR-A- 2 562 010
- JP-A- 6 099 729
- US-A- 4 519 360
- US-A- 4 528 590
- US-A- 4 787 353
- VDO-Querschnitt Nr. 4, März 1981, Schwabach, DE; "Inteligente Regelung in der Motor-Peripherie"
- DE-Zeitschrift: "Automobil-industrie", 28. Jahrgang, Heft 2/Juni 1983, S. 155 bis 160
- ATZ 89 (1987) 6, S. 301, 302 und 305 bis 310
- MTZ 48 (1987) 9, S. 315 bis 318 und 321 bis 323

## Description

The present invention relates to a foot controlled or pedal operated mechanism for electronic throttle control in a vehicle, for example, a diesel engine powered truck.

Control of the rate at which fuel is dispensed to the cylinders of a diesel engine, commonly referred to as throttle control, is accomplished by adjusting the output of a fuel pump. Throttle controls have evolved from a mechanical linkage directly connecting a foot pedal to the fuel pump, to an electronic linkage between the pedal and a computer, the computer then controlling the pump.

Prior to the development of the electronic linkage, a pedal was mechanically linked to the fuel pump and actuation of the pedal by the foot altered the output of fuel pumped by the fuel pump. The foot pedal was held in a home or idle position by a spring means and the operator would merely depress the pedal to increase the fuel output of the pump thereby controlling the RPM and/or power output of the engine. The linkage of the pedal to the pump was proportional, so that the more the pedal was depressed, the more fuel was delivered to the cylinders. Fuel dispensing was thus based purely on the demand made by the operator.

The current trend in diesel engines is to provide for electronic control of the fuel pump output. The fuel pump is controlled by a computer which reacts to an input signal from the foot pedal. In the electronic or computer controlled system, the operator still utilizes a foot pedal. Instead of being mechanically linked to the pump, the pedal position is monitored by the computer, the monitoring function being effected through the use of a potentiometer. The potentiometer is rotated with depression of the pedal and provides an input signal to the computer dependent on its rotational position.

The computer controls the fuel pump output on the basis of input data from the potentiometer but it also factors in other data, for example, temperature, humidity, and engine load, to provide increased efficiency, economy of operation, and to reduce undesirable emissions to the atmosphere.

Initially the potentiometer was located in the engine compartment near the fuel pump. This was an undesirable arrangement because of the complex mechanical linkage required to connect the foot pedal to the potentiometer. The operating environment was also disadvantageous in that it exposed the potentiometer to heat, oil and dirt that tended to cause premature failure of the potentiometer. The potentiometer was then coupled to a foot pedal assembly by means providing motion of the potentiometer in reaction to depression of the pedal.

A pedal mechanism of this kind, according to the precharacterising portion of Claim 1 is known from US-A-4 519 360.

The floor mounting of the pedal assembly limited the design configuration and placement of the components, and making adaptions for different potentiometers requiring different degrees of rotation necessitated a major design change. In some instances, the modified design configuration required that operator convenience be compromised.

The present invention therefore provides a pedal mechanism of the kind described above but including the characterising feature of Claim 1.

The present invention thus provides a foot pedal mechanism that can be mounted on the front wall of the truck cab in a manner that permits conventional foot pedal control, that is, it allows a suspended pedal arrangement that provides operator convenience not previously available.

The support structure is specially configured to be mounted to the front wall of the truck cab by way of the base. The front wall is here intended to mean the vertical or near vertical wall that is forward of the truck driver's feet and thus in front of the foot pedals (brake and accelerator pedals) that are manipulated by the driver. The invention is directed to the accelerator foot pedal and hereafter the term "foot pedal" will be used to refer to the accelerator foot pedal.

The support structure of the invention provides a pivot for the foot pedal, which may be referred to as a suspended foot pedal to differentiate it from a floor mounted foot pedal, and a pivotal mounting for a spring loaded spool that is connected to the potentiometer. An extended segment of the foot pedal acts as a lever and is connected through a cable to the spool. The manner of connecting the cable to the spool and foot pedal establishes a relative movement between the spool and foot pedal whereby the typical range of foot pedal movement translates into the required rotative movement of the spool and thus the potentiometer. The foot pedal, spool, potentiometer and their various components are sometimes collectively referred to herein as a foot pedal arrangement or mechanism.

The support structure preferably includes a stop to limit the foot pedal movement and a safety or idle validation switch that is engaged by the spool to confirm idle mode, that is, when the foot pedal is in the fully retracted (non-depressed) state.

The invention is further described below, by way of example, with reference to the accompanying drawings, in which:

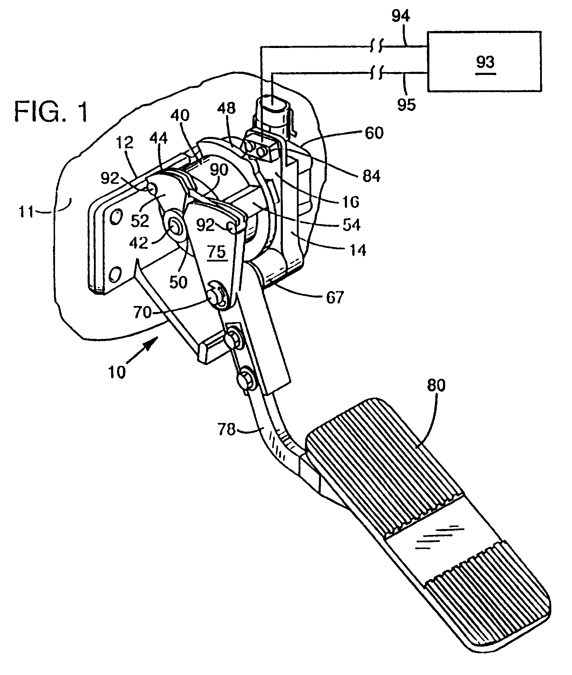

Fig. 1 is a perspective view of a foot pedal mechanism or arrangement in accordance with the present invention;
Fig. 2 is a side view of the foot pedal mechanism of Fig. 1;
Fig. 3 is a top view of the foot pedal mechanism of Figs. 1 and 2; and
Fig. 4 is a perspective exploded view illustrating various components of the foot pedal mechanism of Figs. 1, 2 and 3.

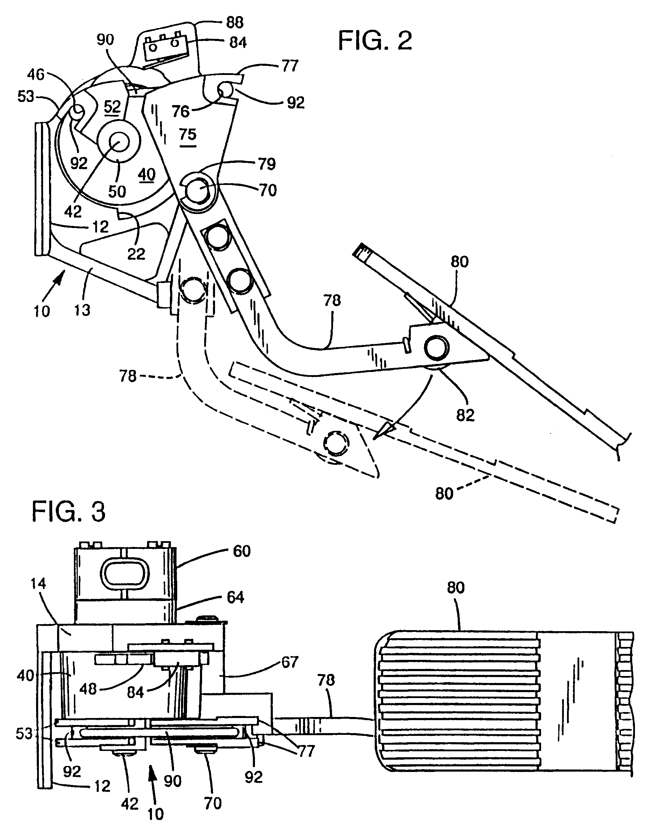

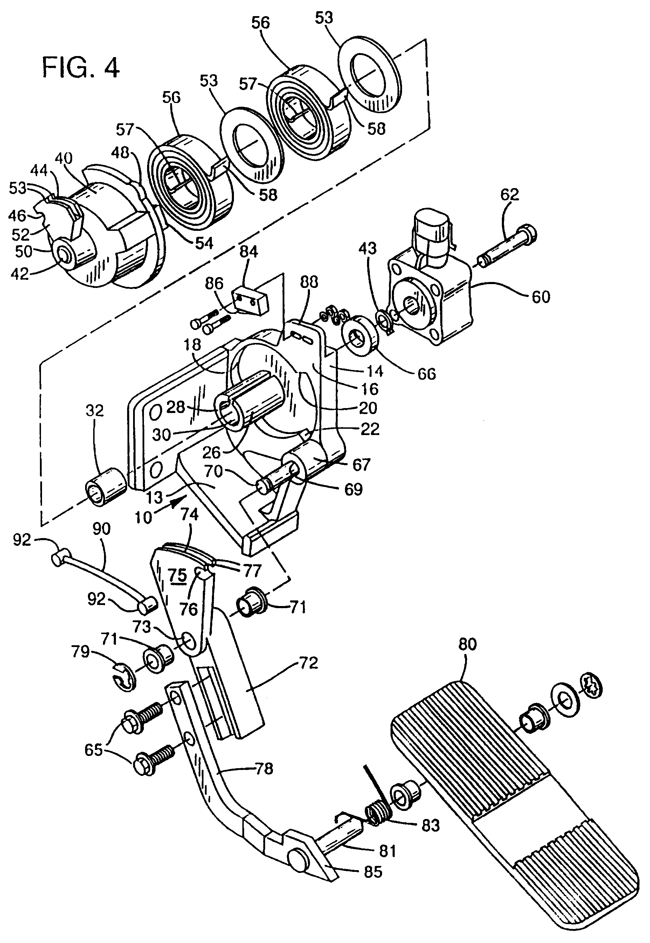

The illustrated foot pedal arrangement or mechanism 10 has a mounting base 12 configured to be rigidly attached to the front wall 11 in a cab of a diesel engine powered truck. Affixed to the base 12 is a plate-like support structure 14 which extends outwardly from the base and has a recess 18 formed in one side 16 (see Fig. 4). The formed recess 18 has radial limit stops 20 and 22. Extending outwardly from the recess 18 and beyond the side 16 is a cylindrical hub 26, having a longitudinal groove 28 in its periphery. On the side opposite to the side 16 (see Fig. 3), a pad 64 integral with the structure 14 is positioned in alignment with the hub 26. The hub 26, the structure 14 and the pad 64 have a common through-bore 30. The outward end of hub 26 is counter-bored to accept a bearing 66. These features of the support structure 14 provide the support and inter-connection for a spool 40 and a potentiometer 60, as is later described.

A stud portion 67 extending from the side 16 is spaced outwardly from the recess 18. A second bore 69 extends into the stud portion 67 and is parallel to the bore 30. A pivot shaft 70 is supported in bore 69. Extending upwardly along side 16, above the recess 18, is a flange 88 which is slotted for adjustably mounting a micro-switch 84 by threaded fasteners. Projected from the lower edge of the base 12 is a brace portion 13 that also functions as a stop to limit pivoting of a foot pedal assembly, described below.

The spool 40 has a center cavity, being generally in the shape of a cylinder with an open and a closed end. A shaft 42 has one end rigidly attached to a hub 50 at the closed end of the spool 40. The shaft 42 extends through and beyond the cavity of the spool 40. Projecting radially outwardly from the hub 50 and adjacent the closed end of spool 40 is a configured segment 52, and on the periphery of segment 52 is a carrier 44. The carrier 44 has a formed groove having parallel sides and a bottom surface which is curved, the curvature being on an arc concentric with the shaft 42. The ends 53 of the parallel sides have notches 46.

A cam 48 is formed on the periphery of the spool 40 near its open end. A lobe 54 projecting outwardly from the cylindrical surface of the spool 40 and extends the length of the spool. The lobe 54 has a slot that is open to the cavity of the spool and is arranged to receive the external flanges 58 of a pair of torque springs 56. Spacer washers 53 separate the springs from each other and from the inner face of the recess 18.

The foot pedal assembly includes a pivot arm 72 having a bore 73 and a configured segment 75 projecting radially from the bore. On the periphery of the segment 75 is a carrier 74 which, like the carrier 44, is a formed groove having parallel sides, with the bottom of the groove curved, the curvature being an arc concentric or coaxial with the bore 73. The ends 77 of the parallel sides have notches 76.

Extending from the pivot arm 72 in the direction opposite to that of the segment 75, and attached to the arm by screws 65, is a pedal arm 78. A foot pedal 80 is attached to arm 78 by a pin 81 projected through the arm 78 and receiving lugs 82 on the bottom of pedal 80 (see Fig. 2). A spring 83 urges the pedal 80 against an inclined landing 85 on the arm 78.

A flexible link, in the form of a cable 90, has a dowel 92 affixed transversely at each of its ends. The dowels 92 slidably engage in the notches 46,76 of the carriers 44 and 74. The carriers 44 and 74 are in alignment one with the other and the cable 90 is aligned in the grooves of the carriers, so as to provide a linkage between the spool 40 and the foot pedal components 72, 78, 80.

As previously explained, the spool 40 has the spirally wound tension springs 56 and the washers 53 inserted within its cavity, with the outer flanges 58 of the springs engaging the slot of the lobe 54. The inner flanges of the springs 56 fit in the groove 28 of the hub 26. The spool shaft 42 is rotatably mounted in bearings 32 and 66 and is axially retained by a retainer 43. The shaft 42 extends into and couples with the input shaft of the potentiometer 60, which is attached to the pad 64 by fasteners 62.

The springs 56 apply a yieldable rotative force to the spool 40, with the rotation of the spool being limited by the engagement of the lobe 54 against the limit stop 20. This angular or rotational position of the spool 40 and, therefore, of the potentiometer, because they are coupled by the shaft 42, will be referred to as the home position or the idle mode.

The operating lever 86 of the micro-switch 84 is aligned for engagement with the cam 48 of the spool 40. When the spool 40 and the potentiometer 60 are in the home position or idle mode, the operating lever 86 will have actuated the micro-switch so as to provide an idle mode confirmation signal to a computer 93 by a connecting line 94.

The pivot arm 72 is rotatably mounted on the pivot shaft 70 by bearings 71. The pivot shaft 70 has a retainer 79 to secure the pivot arm 72 on the shaft 70.

In operation, the pedal 80 is depressed, pivoting the pivot arm 72 about the pivot shaft 70. This pivoting action provides motion to the carrier 74 which is transmitted to the carrier 44 through the cable 90, causing a rotative motion of the spool 40 which in turn rotates the potentiometer 60. Note that the limit stop 22 in the recess 18 limits the rotation of the spool 40. The degree of rotation permitted between the limit stops 20 and 22 is dictated by the rotational requirement of the potentiometer to move between minimum and maximum output values.

Depressing the pedal fully rotates the spool 40 and the potentionmeter 60 through the maximum degrees allowed, the rotation being limited by the limit stop 22. This maximum rotation provides a signal to computer 93 through a connecting line 95 for maximum engine RPM. The pedal depression is infinitely adjustable from idle to maximum RPM. The rate of the RPM of the engine is proportioned to the pedal displacement, because of the response of the computer 93 to the monitoring of the spool rotation.

The pivot arm in the preferred embodiment illustrated has an ideal angular motion of 27 degrees. This is considered to be the best arrangement for operator utilization, safety and comfort.

The rotational requirement of the potentiometer 60 determines the amount of angular rotation of the spool 40. In the preferred embodiment, the potentiometer requires a rotation of 53 degrees. Therefore, the limit stops 20 and 22 are spaced angularly at fifty-three degrees plus a compensation in consideration of the width of the lobe 54. The ratio of the radial distance of the curved surface of the carrier 74 engaged by the cable 90 to the radial distance of the corresponding curved surface of carrier 44 is therefore two-to-one. The additional degree of rotation that would be imparted to the spool 40 is attributable to the "lost motion" of the connecting members of the flexible link 90 and the carriers 44 and 74 due to the allowable tolerance of fit.

The capability of adjusting the aforementioned ratio of the radii and the angular displacement of the limit stops provides an electronic throttle control that is easily adapted to differing potentiometers.

The configuration of the support structure provides a suspended type pedal design, unlimited in its configuration.

The micro-switch 84 provides an idle mode confirmation signal that is a safety feature in the event of potentiometer failure. Regardless of the signal generated by the potentiometer 60, with the foot pedal in the home position, the switch 84 signals the computer 93 through the connecting line cable 94 of the desired idle mode, the reby overriding the potentiometer.

Two springs 56 are provided for safe operation in the event that one of the springs breaks. The torque applied by the one spring still operative is adequate to return the spool 40 to the home or idle position.

## Claims

1. A pedal mechanism for controlling the throttle of an internal combustion engine in a vehicle, the mechanism comprising a suspended pedal (80) pivotally mounted on a shaft (70) and coupled to a rotatable shaft of a monitoring device (40,60) by a coupling means (90) so that the monitoring device monitors pivotal movement of the pedal (80) to provide an input to a computer (93) for controlling the throttle, characterized in that both the monitoring device and the pedal are mounted on a single support structure (14), the support structure including a base (12) arranged to be secured to an upright wall (11) of a cab of the vehicle so as to commonly mount the pedal (80) and the monitoring device (40,60) on the wall, the monitoring device (40, 60) including a spring biased spool, and wherein the support structure (14) includes a single plate-like member which extends from the base (12), and the spool (40) is rotatably mounted to one side of the plate-like member and the suspended pedal (80) and the shaft (70) are mounted to the said one side of the said plate-like member.

2. A mechanism as claimed in Claim 1, wherein the monitoring device comprises a rotatable potentiometer (60) to which the pedal (80) is coupled by said coupling means (90) directly converting the pivotal movement of the pedal, Throughout the range of the pivotal movement, to a proportionate rotative movement of the potentiometer.

3. A mechanism as claimed in Claim 1, wherein the minimum and maximum rotative positions of the spool (40) are defined by stop limits (20,22) on the support structure (14).

4. A mechanism as claimed in Claim 1 or 3, wherein the translation means comprises a flexible link (90) between the spool (40) and the pedal (80), the effective connection of the flexible link to the spool being at a first predetermined distance from the axis of rotation of the spool, and the effective connection of the flexible link to the pedal being at a second predetermined distance from the axis of pivoting of the pedal (80), the first and second predetermined distances having a ratio corresponding to the ratio of the angular movements from minimum to maximum for the foot pedal and the spool respectively.

5. A mechanism as claimed in Claim 4, wherein the effective connections of the flexible link (90) are at a curved carrier surface provided on each of the spool (40) and the pedal (80), the curved surfaces formed as the radial distances corresponding to the first predetermined distance and second predetermined distance respectively, and wherein the flexible link engages a point of tangency on each of the curved carrier surfaces throughout the minimum to maximum movement of the spool and the foot pedal.

6. A mechanism as claimed in Claim 5, wherein the spool (40) is rotatably mounted on the support structure (14) forward of the pivotal mounting of the pedal (80), wherein the pedal comprises a pedal portion (80), an arm portion (72), the pivotal mounting being to the arm portion, and an arm extension (75) extending beyond the pivotal mounting, and wherein the pedal carrier surface is provided at the arm extension, whereby pivoting of the pedal portion forward causes pivoting of the arm extension rearwardly so as to draw the flexible link (90) and thus effect rotation of the spool.

7. A mechanism as claimed in any one of Claims 1,3,4,5 or 6, wherein the minimum position of the pedal (80) and accordingly, the minimum limit of the spool (40) defines a desired idle mode of the engine, and wherein a detecting means (84) mounted to the support structure detects the minimum rotative position of the spool, the detecting means being directly connected to the computer (93) to indicate the desired idle mode regardless of the input from the potentiometer.

## Patentansprüche

1. Pedalmechanismus zum Steuern des Gaszuges eines Verbrennungsmotors in einem Fahrzeug, wobei der Mechanismus ein aufgehängtes Pedal (80) aufweist, das schwenkbar an einer Welle (70) montiert und über ein Kupplungsmittel (90) so mit einer drehbaren Welle einer Überwachungsvorrichtung (40, 60) verkuppelt ist, daß die Überwachungsvorrichtung die Schwenkbewegung des Pedals (80) überwacht, um Eingangssignale zum Steuern des Gaszuges zu einem Computer (93) zu senden, dadurch gekennzeichnet, daß sowohl die Überwachungseinrichtung als auch das Pedal auf einer einzigen Haltestruktur (14) montiert sind, wobei die Haltestruktur einen Fuß (12) aufweist, der an einer aufrechten Wand (11) des Führerhauses des Fahrzeugs befestigt werden kann, um das Pedal (80) und die Überwachungseinrichtung (40, 60) gemeinsam an der Wand zu befestigen, wobei die Überwachungsvorrichtung (40, 60) eine gefederte Spule einschließt, und wobei die Haltestruktur (14) ein einziges plattenartiges Element umfaßt, das sich von dem Fuß (12) erstreckt, und die Spule (40) drehbar an einer Seite des plattenartigen Elements montiert ist, und das aufgehängte Pedal (80) und die Welle (70) an der genannten einen Seite des genannten plattenartigen Elements angebracht sind.

2. Mechanismus nach Anspruch 1, bei dem die Überwachungsvorrichtung ein drehbares Potentiometer (60) aufweist, mit dem das Pedal (80) über das genannte Kupplungsmittel (90) verkuppelt ist, das die Schwenkbewegung des Pedals über den gesamten Bereich der Schwenkbewegung unmittelbar in eine proportionale Drehbewegung des Potentiometers umwandelt.

3. Mechanismus nach Anspruch 1, wobei die minimale und maximale Drehposition der Spule (40) durch Anschläge (20, 22) an der Haltestruktur (14) begrenzt sind.

4. Mechanismus nach Anspruch 1 oder 3, bei dem das Übersetzungsmittel eine flexible Verbindung (90) zwischen der Spule (40) und dem Pedal (80) aufweist, wobei sich der effektive Anschlußpunkt der flexiblen Verbindung an der Spule in einem ersten vorbestimmten Abstand von der Drehachse der Spule befindet, und der effektive Anschlußpunkt der flexiblen Verbindung an dem Pedal sich in einem zweiten vorbestimmten Abstand von der Drehachse des Pedals (80) befindet, wobei der erste und zweite vorbestimmte Abstand ein Verhältnis zueinander aufweisen, das dem Verhältnis der Winkelbewegungen von Minimum zu Maximum jeweils des Fußpedals bzw. der Spule entspricht.

5. Mechanismus nach Anspruch 4, wobei sich die effektiven Anschlußpunkte der flexiblen Verbindung (90) an einer gekrümmten Trägerfläche befinden, die jeweils auf der Spule (40) und dem Pedal (80) vorgesehen ist, wobei die gekrümmten Flächen als die Radialabstände ausgebildet sind, die jeweils dem ersten vorbestimmten Abstand und dem zweiten vorbestimmten Abstand entsprechen, und wobei die flexible Verbindung in einen Tangentialpunkt an jeder der gekrümmten Trägerflächen im Bereich der minimalen bis zur maximalen Bewegung der Spule und des Fußpedals eingreift.

6. Mechanismus nach Anspruch 5, bei dem die Spule (40) an der Haltestruktur (14) vor der Schwenkbefestigung des Pedals (80) drehbar montiert ist, wobei das Pedal einen Pedalteil (80), einen Armteil (72), wobei sich die Schwenkbefestigung an dem Armteil befindet, und eine Armverlängerung (75) aufweist, die über die Schwenkbefestigung hinaus verläuft, und wobei die Pedalträgerfläche an der Armverlängerung vorgesehen ist, so daß der Schwenkvorgang des Pedalteils nach vorne ein Schwenken der Armverlängerung nach hinten bewirkt, so daß die flexible Verbindung (90) angezogen wird und so die Rotation der Spule bewirkt.

7. Mechanismus nach einem der Ansprüche 1, 3, 4, 5 oder 6, bei dem die minimale Position des Pedals (80) und demgemäß die Mindestgrenze der Spule (40) einen gewünschten Leerlaufmodus des Motors definiert, und wobei ein an der Haltestruktur angebrachtes Erfassungsmittel (84) die minimale Drehposition der Spule erfaßt, wobei das Erfassungsmittel unmittelbar an den Computer (93) angeschlossen ist, um den gewünschten Leerlaufmodus unabhängig von den Eingangssignalen des Potentiometers anzuzeigen.

## Revendications

1. Mécanisme de pédale pour contrôler le papillon des gaz d'un moteur à combustion interne dans un véhicule, le mécanisme comportant une pédale suspendue (80) montée de manière pivotante sur un axe (70) et accouplée à un axe rotatif d'un dispositif de contrôle (40, 60) par un moyen d'accouplement (90) de sorte que le dispositif de contrôle surveille le mouvement pivotant de la pédale (80) pour fournir une entrée à un ordinateur (93) pour contrôler le papillon des gaz, caractérisé en ce que le dispositif de contrôle et la pédale sont tous deux montés sur une structure de support unique (14), la structure de support comprenant un bâti (12) disposé pour être fixé à une paroi verticale (11) de la cabine du conducteur du véhicule de manière à monter en commun la pédale (80) et le dispositif de contrôle (40,60) sur la paroi, le dispositif de contrôle (40, 60) comprenant un tambour chargé à ressort, et dans lequel la structure de support (14) inclut un élément en forme de plaque qui s'étend depuis le bâti (12), et le tambour (40) est monté de manière rotative sur un côté de l'élément en forme de plaque et la pédale suspendue (80) et l'axe (70) sont montés sur ledit côté dudit élément en forme de plaque.

2. Mécanisme selon la revendication 1, dans lequel le dispositif de contrôle comporte un potentiomètre rotatif (60) auquel la pédale (80) est accouplée par ledit moyen d'accouplement (90) convertissant directement le mouvement pivotant de la pédale, sur l'ensemble du parcours du mouvement pivotant, en un mouvement rotatif proportionné du potentiomètre.

3. Mécanisme selon la revendication 1, dans lequel les positions rotatives minimales et maximales du tambour (40) sont définies par des limites d'arrêt (20, 22) sur la structure de support (14).

4. Mécanisme selon la revendication 1 ou 3, dans lequel le moyen de translation comprend un lien intermédiaire souple (90) entre le tambour (40) et la pédale (80), la connexion efficace du lien intermédiaire souple au tambour se trouvant à une première distance prédéterminée à partir de l'axe de rotation du tambour, et la connexion efficace du lien intermédiaire souple à la pédale se trouvant à une deuxième distance prédéterminée à partir de l'axe de pivotement de la pédale (80), la première et la deuxième distances prédéterminées ayant un rapport correspondant au rapport des mouvements anguleux depuis le minimum jusqu'au maximum pour la pédale du pied et le tambour respectivement.

5. Mécanisme selon la revendication 4, dans lequel les connexions efficaces du lien intermédiaire souple (90) se trouvent sur une surface de support courbe prévue à la fois sur le tambour (40) et la pédale (80), les surfaces courbes formées en tant que distances radiales correspondant à la première distance prédéterminée et à la deuxième distance prédéterminée respectivement, et dans lequel le lien intermédiaire souple engage un point tangent sur chacune des surfaces de support courbes sur l'ensemble du mouvement minimum-maximum du tambour et de la pédale de pied.

6. Mécanisme selon la revendication 5, dans lequel le tambour (40) est monté de façon rotative sur la structure de support (14) en avant du montage pivotant de la pédale (80), dans lequel la pédale comporte une portion de pédale (80), une portion de bras (72), le montage pivotant se trouvant au niveau de la portion de bras, et un avant-bras (75) s'étendant au-delà du montage pivotant, et dans lequel la surface de support de la pédale est prévue sur l'avant-bras, de sorte que le mouvement pivotant de la portion de pédale vers l'avant provoque le mouvement pivotant de l'avant-bras vers l'arrière de manière à tirer le lien intermédiaire souple (90) et par conséquent à effectuer la rotation du tambour.

7. Mécanisme selon l'une quelconque des revendications 1, 3, 4, 5 ou 6, dans lequel la position minimale de la pédale (80) et, par conséquent, la limite minimale du tambour (40) définit un mode de fonctionnement au ralenti désiré du moteur, et dans lequel un moyen de détection (84) monté sur la structure de support détecte la position rotative minimale du tambour, le moyen de détection étant directement relié à l'ordinateur (93) pour indiquer le mode de fonctionnement au ralenti sans tenir compte de l'entrée provenant du potentiomètre.
